Europäisches Patentamt

European Patent Office

Office européen des brevets

(19)

(11) **EP 0 731 886 B1**

(12) **FASCICULE DE BREVET EUROPEEN**

(45) Date de publication et mention
de la délivrance du brevet:
**26.01.2000   Bulletin 2000/04**

(21) Numéro de dépôt: **95934167.8**

(22) Date de dépôt: **04.10.1995**

(51) Int Cl.⁷: **F16J 1/22**, F16C 11/06

(86) Numéro de dépôt international:
**PCT/FR95/01289**

(87) Numéro de publication internationale:
**WO 96/10706 (11.04.1996 Gazette 1996/16)**

(54) **DISPOSITIF DE LUBRIFICATION D'UN ASSEMBLAGE ENTRE DEUX PIECES MECANIQUES MOBILES L'UNE PAR RAPPORT A L'AUTRE, NOTAMMENT ARTICULATION BIELLE-PISTON**

SCHMIERVORRICHTUNG EINES ZUSAMMENBAUS VON ZWEI MECHANISCH VERBUNDENEN TEILEN, BZW. KOLBEN UND PLEUELSTANGE

DEVICE FOR LUBRICATING A COUPLING BETWEEN TWO MUTUALLY MOVABLE MECHANICAL PARTS, PARTICULARLY A CONNECTING ROD/PISTON COUPLING

(84) Etats contractants désignés:
**DE FR GB IT**

(30) Priorité:  **04.10.1994   FR 9411842**

(43) Date de publication de la demande:
**18.09.1996   Bulletin 1996/38**

(73) Titulaire: **Melchior, Jean Frédéric**
**F-75014 Paris (FR)**

(72) Inventeur: **Melchior, Jean Frédéric**
**F-75014 Paris (FR)**

(74) Mandataire: **Bernasconi, Jean**
**c/o Cabinet Lavoix,**
**2, Place d'Estienne d'Orves**
**75441 Paris Cédex (FR)**

(56) Documents cités:
**EP-A- 0 280 622          EP-A- 0 451 011**
**GB-A- 551 362**

## Description

La présente invention a trait à un dispositif de lubrification sous pression d'un assemblage entre deux pièces mécaniques mobiles l'une par rapport à l'autre, dont l'une est soumise à des forces cycliquement alternées en intensité et non pas en direction et d'intensité moyenne variable, transmises à l'autre par l'intermédiaire d'une couche d'huile remplissant un interstice ayant une surface d'action déterminée et situé dans l'interface formée entre lesdites deux pièces mécaniques, qui comporte :

- des moyens d'alimentation en lubrifiant liquide compressible sous basse pression,
- des moyens générateurs de haute pression du lubrifiant liquide compressible comprenant une pompe hydraulique comportant un piston susceptible de se déplacer axialement dans un cylindre entre deux positions, de façon à constituer une chambre de volume variable dont la variation maximale est appelée cylindrée de la pompe, ladite chambre de volume variable étant reliée, au travers de moyens de communication unidirectionnels, aux susdits moyens d'alimentation en lubrifiant liquide, et débouche à travers des moyens de communication unidirectionnels, dans le susdit interstice, et des moyens de rappel élastique agissant sur le susdit piston de pompe de façon à s'opposer à l'action de la pression du lubrifiant liquide sous pression,
- les susdits moyens générateurs de haute pression du lubrifiant liquide compressible étant actionnés directement par les susdites forces cycliquement alternées et par la force de rappel des susdits moyens de rappel élastique,
- les susdits moyens de rappel élastique étant dimensionnés pour rappeler le piston dans sa position d'origine au repos, lorsque l'intensité des forces cycliques alternées se rapproche ou est voisine de sa valeur cyclique minimale, une pièce d'articulation étant interposée entre lesdites deux pièces mécaniques mobiles l'une par rapport à l'autre, ladite pièce d'articulation coopérant avec la première des deux pièces mécaniques de façon à constituer, entre leurs faces coopérantes, la susdite interface, et avec ladite seconde pièce mécanique de façon à constituer la susdite pompe hydraulique.

L'invention se rapporte notamment à un dispositif lubrifié tel qu'un assemblage entre une bielle et un piston, articulés entre eux, d'une machine alternative à compression de fluide, tel que par exemple, un assemblage bielle-piston de moteur alternatif à combustion interne ou externe à deux temps ou un compresseur volumétrique. L'invention est notamment relative à ceux de ces assemblages dans lesquels le piston possède, à l'intérieur d'une jupe extérieurement cylindrique, une portée partiellement sphérique, ou non, destinée à recevoir de façon articulée le pied, partiellement sphérique ou non, de la bielle. De tels dispositifs sont décrits dans le brevet européen EP-A-0 280 622 et comportent :

- une bielle télescopique dont le pied comporte une extrémité d'axe parallèle à l'axe principal de la bielle,
- un piston coulissant alternativement dans un cylindre coopérant avec une culasse de façon à comprimer un fluide et présentant dans sa partie inférieure un évidement dans lequel vient se loger le pied de la bielle,
- une pièce d'articulation interposée entre le pied de bielle et le piston, qui présente une surface extérieure qui coopère dans sa partie supérieure, avec un jeu de fonctionnement minimal, avec la surface inférieure du susdit évidement aménagé dans la partie inférieure du piston,
- l'une desdites bielle et pièce d'articulation comportant une extrémité réalisée sous forme d'un manchon cylindrique formant piston, et l'autre comportant un alésage borgne dans lequel coulisse, avec un jeu de fonctionnement minimal, la susdite extrémité en forme de manchon cylindrique, de façon à délimiter une première cavité ou chambre de volume variable,
- des moyens d'alimentation en lubrifiant liquide sous pression qui font communiquer la susdite première cavité de volume variable, à travers un clapet d'aspiration, avec des moyens d'alimentation sous basse pression aménagés dans le corps de bielle, et à travers un clapet de refoulement, avec le susdit interstice situé dans l'interface entre la surface intérieure du susdit évidement aménagée dans la partie inférieure du piston et la surface extérieure supérieure de la susdite pièce d'articulation,
- des moyens de rappel élastique interposés entre l'extrémité en forme de manchon cylindrique et la surface supérieure de l'alésage borgne dans lequel coulisse cette susdite extrémité,
- l'ensemble de la première cavité de volume variable, des moyens de rappel élastique et des clapets d'aspiration et de refoulement constituant une pompe hydraulique à haute pression actionnée par la pression du fluide comprimé s'exerçant sur ledit piston.

On sait que la lubrification de l'articulation bielle-piston est critique dans les moteurs alternatifs, et notamment dans les moteurs à cycle à deux temps. En effet dans ces derniers la résultante des efforts est toujours dirigée dans la même direction tant au point mort haut (PMH) qu'au point mort bas (PMB), de sorte qu'il est très difficile de lubrifier l'articulation bielle-piston, du fait de l'épuisement du film d'huile comprimé en permanence.

Le susdit brevet européen apporte une solution au problème en réalisant dans le dispositif une pompe à huile à haute pression réalisée par la susdite pièce d'articulation interposée entre le pied de bielle et le piston dont l'alésage forme un cylindre de pompe dans lequel coulisse un piston de pompe formé par le pied en forme de manchon cylindrique de la bielle, les moyens de rappel élastique pouvant être un ressort réalisé, de préférence, sous forme d'un barreau métallique implanté dans l'âme de la bielle. Cette pompe fonctionne au refoulement au voisinage du PMH lorsque la résultante des forces dirigées vers le bas comprime le ressort, et à l'aspiration par détente du ressort dont la force de rappel est supérieure à la résultante des forces dirigées vers le bas, au moins au voisinage du PMB.

Cette disposition présente cependant quelques inconvénients. En effet l'huile est introduite sous pression dans l'articulation lorsque le piston moteur est au voisinage du PMH, c'est-à-dire, en général, lorsque les forces s'exerçant sur l'articulation sont maximales, par exemple pour un moteur alternatif à deux temps ou un compresseur volumétrique. La pompe doit donc délivrer l'huile de lubrification sous une pression très élevée et pendant une fenêtre de temps assez étroite, au voisinage du PMH. La réalisation d'un tel dispositif, la mise en oeuvre de l'étanchéité et le contrôle des déformations peuvent donc s'avérer délicates surtout dans les machines où des pressions importantes sont développées.

La présente invention se propose de remédier à ces inconvénients et de fournir un dispositif de lubrification d'une articulation bielle-piston, et, plus généralement par extension, d'un assemblage entre deux pièces mécaniques mobiles l'une par rapport à l'autre et soumises à des forces cycliquement alternées, permettant d'assurer, d'une façon efficace, la lubrification de l'interface entre les susdites pièces, en délivrant le liquide de lubrification à une pression nettement inférieure aux pressions extrêmes susceptibles d'être atteintes dans l'interface et ceci pendant une durée permettant d'assurer l'alimentation complète de l'interface, et ceci même dans le cas d'assemblages dans lesquels la résultante des forces cycliques s'exerçant sur l'assemblage est toujours orientée dans la même direction et dans le cas où elle peut atteindre cycliquement des valeurs maximales extrêmement élevées.

En conséquence, et d'une façon générale, l'invention a pour objet un assemblage tel que défini ci-dessus et qui est caractérisé en ce que :

- le susdit interstice communique, de préférence en permanence, avec une cavité de volume fixe formant réserve de lubrifiant liquide,
- le rapport entre le volume de ladite cavité et la cylindrée de la susdite pompe étant suffisamment élevé pour que, compte tenu de la compressibilité du lubrifiant liquide compressible, le susdit piston de pompe puisse se débattre cycliquement entre ses deux positions, sous la seule action des susdites forces cycliquement alternées et de la force de rappel des susdits moyens de rappel élastique, au moins lorsque lesdites forces atteignent leur intensité moyenne maximale, c'est-à-dire l'intensité moyenne des forces cycliquement variables lors des régimes dans lesquels les forces motrices et/ou résistantes auxquelles sont soumises les pièces de l'assemblage, sont les plus élevés prévues pour l'assemblage,

- la surface d'action de l'interstice étant suffisamment élevée et le volume de la cavité, rapporté au volume de la cylindrée de la pompe, suffisamment faible pour que la pression générée dans ledit interstice puisse atteindre la valeur permettant d'écarter la première pièce mécanique de la pièce d'articulation, pendant la partie du cycle de variation des forces cycliquement alternées pendant laquelle l'intensité de ces forces cycliques alternées est minimale, et au bout d'un nombre de cycles faible, de préférence d'un seul cycle,
- la cylindrée de la pompe étant suffisamment élevée pour pouvoir compenser cycliquement la quantité de lubrifiant liquide susceptible de fuir et de s'échapper de la susdite interface par les jeux de fonctionnement de l'assemblage, ces jeux étant suffisamment élevés pour permettre la lubrification hydrodynamique de l'assemblage sans contact direct entre les matériaux constitutifs de celui-ci.

Si l'on préfère que la susdite cavité de volume fixe communique en permanence avec l'interface, on comprend qu'il suffise que la communication soit établie au voisinage du Point Mort Bas.

On préfère que la cavité se remplisse en un seul cycle de façon à éviter une lubrification intermittente, absente pendant la période de reremplissage.

L'assemblage selon l'invention peut être avantageusement un assemblage articulé entre une bielle et un piston d'une machine alternative à compression de fluide tel que défini ci-dessus.

Dans ce mode de réalisation, le volume de ladite cavité de volume fixe peut être avantageusement suffisamment élevé, par rapport à la cylindrée de la pompe hydraulique, pour que la pression dans ladite cavité reste inférieure à la pression dudit fluide multipliée par le rapport entre la section transversale dudit piston et la section transversale du susdit manchon cylindrique constituant, par exemple, l'extrémité du pied de bielle.

La détermination du volume optimal de la cavité, compte tenu des différents paramètres de dimensionnement et de fonctionnement de l'assemblage entre les deux pièces, peut être effectué, au moins approximativement par un calcul simple dont un exemple sera donné ci-après.

Dans de nombreux cas, et notamment dans le cas de dispositifs de lubrification de l'articulation piston-bielle de moteurs alternatifs, notamment de moteurs à cycle à deux temps, le volume de ladite cavité peut être avantageusement compris entre 30 et 100 fois la cylindrée de la pompe, laquelle peut être déterminée de façon usuelle en connaissant les dimensions de l'interface, les pressions auxquelles sont soumises les deux surfaces délimitant l'interface et le débit de fuite, et donc le débit de lubrifiant souhaité.

De préférence les susdits moyens de rappel élastique sont constitués par un barreau métallique ou en tout autre matériau élastique adéquat, par exemple composite, logé axialement dans la susdite seconde pièce métallique et d'une section suffisamment petite pour être complètement comprimé, de façon que la susdite pièce d'articulation vienne en contact direct avec ladite seconde pièce métallique lorsque l'intensité de la susdite force cycliquement alternée est maximale et dirigée depuis la première pièce vers la seconde, et d'une section suffisamment élevée pour être complètement détendu, c'est-à-dire de telle façon que la susdite chambre de volume variable atteigne sa valeur maximale lorsque l'intensité de la susdite force cycliquement alternée est minimale, ledit barreau étant d'une longueur suffisante pour que, entre la position comprimée et la position détendue, le matériau constituant ledit barreau n'atteigne en aucune circonstance sa limite de fatigue.

Ce barreau peut être réalisé d'un seul tenant ou être constitué de deux ou plusieurs pièces télescopiques disposées les unes dans les autres afin d'obtenir un débattement longitudinal total important.

La cavité fixe selon l'invention peut être disposée dans la pièce d'articulation ou même dans la susdite première pièce mécanique, par exemple un piston, auquel cas le débouché du lubrifiant liquide vers l'interstice est situé dans la communication entre le clapet de refoulement et la cavité. La cavité peut également être pratiquée partiellement dans la pièce d'articulation et ladite première pièce mécanique.

Les moyens qui assurent le caractère unidirectionnel des flux de lubrifiant peuvent être des clapets classiques, autoactionnés à siège, par exemple, des clapets à billes.

Cependant dans un perfectionnement de l'invention permettant d'éviter les problèmes dûs à l'inertie, à la faible perméabilité et au retard de fonctionnement de ce genre de clapet, on peut avantageusement utiliser un clapet d'aspiration dont l'ouverture et la fermeture sont commandées directement par le mouvement de la pompe hydraulique. Par exemple ce clapet d'aspiration de la pompe hydraulique peut être constitué par un segment, de préférence sans coupe, logé dans une gorge circulaire aménagée dans la partie supérieure et à la périphérie d'un manchon cylindrique constituant l'extrémité supérieure de la susdite seconde pièce mécanique formant piston de la pompe et coopérant avec la susdite pièce d'articulation en coulissant axialement dans un alésage cylindrique borgne aménagé dans ladite pièce d'articulation, le diamètre extérieur avant montage dudit segment étant légèrement supérieur au diamètre intérieur du susdit alésage cylindrique borgne, de façon à provoquer au montage un léger serrage de ce segment dans l'alésage, le diamètre intérieur de ce segment étant substantiellement supérieur au diamètre intérieur de ladite gorge et sa hauteur étant substantiellement inférieure à celle de ladite gorge de façon à pouvoir battre dans ladite gorge, et la face supérieure de ce segment étant pourvue de passages radiaux permettant l'écoulement du lubrifiant liquide compressible depuis la susdite chambre de volume variable vers les susdits moyens d'alimentation en lubrifiant liquide compressible aux basses pressions, lorsque le segment est en appui sur la face supérieure de la gorge, la sur-hauteur de la gorge circulaire par rapport à la hauteur du segment étant inférieure à la course de compression des moyens de rappel élastique.

Lorsque la susdite première pièce mécanique constitue le corps d'un piston cylindrique coulissant dans un cylindre d'une machine à compression de fluide, la susdite seconde pièce mécanique constitue une bielle dont l'extrémité supérieure peut être avantageusement cylindrique pour coopérer avec la susdite pièce d'articulation, laquelle coopère avec la susdite première pièce mécanique pour former ladite interface à lubrifier, en coulissant axialement dans un alésage cylindrique borgne aménagé à la partie inférieure de ladite pièce d'articulation, de façon à constituer une chambre de volume variable de pompe.

Dans ce cas, la susdite pièce d'articulation peut être constituée par un axe de piston cylindrique perpendiculaire à l'axe principal de la bielle et qui coopère partiellement, avec un jeu de fonctionnement minimal, avec un alésage d'axe perpendiculaire à l'axe du piston et de diamètre égal au jeu de fonctionnement près, à celui dudit axe de piston cylindrique.

La susdite pièce d'articulation peut également être constituée par une pièce dont la surface extérieure supérieure est partiellement sphérique (on entend par partiellement sphérique une surface permettant une articulation du type à rotule) et dont l'axe est situé sur l'axe de la bielle, et qui comporte dans sa partie inférieure un alésage cylindrique borgne coopérant avec la susdite extrémité cylindrique de la bielle pour former la susdite chambre de volume variable. La susdite première pièce mécanique, formant corps de piston, comporte un évidement inférieur dont la surface intérieure est également partiellement sphérique et dont le centre se situe sur l'axe principal de la bielle, de façon à coopérer partiellement, avec un jeu de fonctionnement minimal, avec la surface extérieure de la susdite pièce d'articulation.

D'autres avantages et caractéristiques de l'invention apparaîtront à la lecture de la description suivante, faite à titre d'exemple non limitatif, et se référant au dessin annexé dans lequel :

- la figure 1 représente une vue schématique en section d'un dispositif selon l'invention à articulation du type à rotule ;
- la figure 2 représente une vue schématique en section d'un dispositif selon l'invention à articulation du type à axe ;

- la figure 3 représente une vue d'un dispositif selon la figure 1 avec un moyen de clapet d'admission perfectionné ;

- la figure 4 représente une vue d'un dispositif analogue à la figure 1 avec un barreau métallique télescopique faisant office de moyen de rappel élastique;

- la figure 5 représente une variante de ce dispositif dans le cas d'une rotule à portée réduite ;

- la figure 6 représente une tel dispositif pour un moteur deux temps avec des moyens d'étanchéité entre la première pièce et la pièce d'articulation ;

- la figure 7 représente une vue schématique à une échelle plus importante destinée à expliquer le principe du fonctionnement de l'invention ;

- la figure 8 représente une vue analogue à la figure 7 avec un système de clapet d'admission perfectionné.

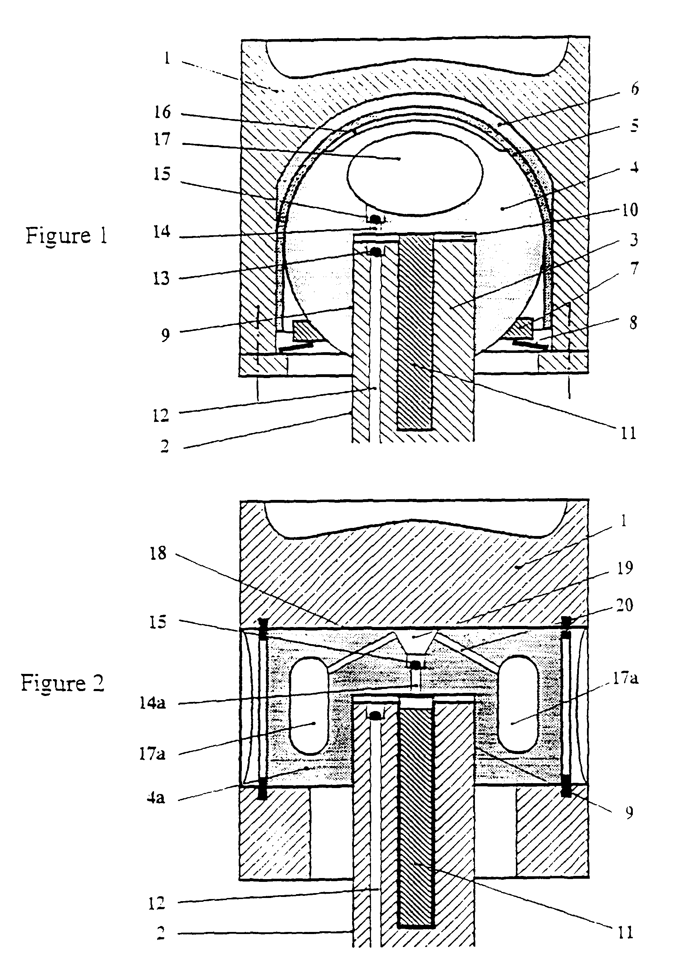

On se réfère tout d'abord à la Figure 1.

On a représenté sur cette figure un assemblage conforme à l'invention comprenant une première pièce mécanique mobile (1), à savoir un piston de moteur diesel à deux temps, se déplaçant dans un cylindre (non représenté) du moteur sous l'effet des gaz moteurs, et, une deuxième pièce mécanique mobile, à savoir une bielle (2) dont la tête est montée sur une manivelle de moteur (non représentée) et dont le pied (3) est articulé sous le piston (1).

L'articulation s'effectue au moyen d'une pièce d'articulation (4) de forme généralement sphérique et dont la surface sphérique supérieure porte contre une coquille mince (5), de forme également partiellement sphérique, reçue au fond d'un évidement interne cylindrique à fond supérieur sphérique pratiqué dans le piston (1).

Entre la coquille (5) et le fond de cet évidement est logé un matériau (6) susceptible de fluer et jouant un rôle d'adaptation, décrit par exemple dans le brevet EP-A-0280 622, le passage de ce matériau hors du volume ainsi créé entre le piston et la coquille (5) étant rendu impossible par l'étanchéité produite entre coquille et piston au niveau de la zone cylindrique de l'évidement et de la zone cylindrique correspondante de la coquille.

La face inférieure de la coquille (5) forme l'une des faces de l'interface à lubrifier alors que la partie polaire de la surface supérieure de la pièce d'articulation (4) forme l'autre face de ladite interface.

En conséquence les deux faces délimitent un interstice susceptible d'être rempli d'huile de lubrification et bordé, à sa périphérie par une zone sensiblement annulaire dans laquelle les surfaces de la pièce (4) et de la coquille (5) peuvent venir en contact en l'absence d'huile.

La pièce d'articulation ou rotule (4) est maintenue en place à l'intérieur de la cavité du piston (1) grâce à une bague de maintien (7) repoussée en direction de la partie supérieure du piston par un élément élastique (8) et l'on comprend donc qu'un certain débattement axial est possible entre la pièce (4) et la coquille (5) du piston le long de l'axe de révolution vertical du piston.

Comme déjà décrit dans le brevet européen EP-A-0 280 622, la pièce d'articulation (4) présente, du côté inférieur, un alésage borgne (9) centré sur l'axe longitudinal du piston et formant une chambre de pompe.

Dans cet alésage (9) peut coulisser l'extrémité supérieure du pied (3) de la bielle (2) usinée selon une forme cylindrique pour former un piston de pompe susceptible de coulisser dans l'alésage (9) pour déterminer avec lui la chambre (10), de volume variable, de la pompe.

Dans l'âme du pied (3) se trouve disposé un moyen élastique de rappel réalisé sous forme d'un barreau métallique (11) logé avec un jeu de fonctionnement dans un perçage axial de la bielle et dont la longueur, à l'état libre, est supérieure à la profondeur du perçage de façon à dépasser dans la chambre (10) et venir au contact du fond de l'alésage (9) pratiqué dans la rotule (4).

Ce barreau forme ainsi un élément élastique susceptible d'être comprimé lorsque la résultante des forces orientée vers le bas est appliquée par le piston sur la pièce d'articulation (4) est élevée, notamment au voisinage du PMH, et de se décomprimer lorsque cette résultante de force devient faible, notamment au voisinage du PMB.

L'alimentation en lubrifiant liquide de la pompe ainsi réalisée s'effectue à l'aide d'un canal pratiqué longitudinalement dans la bielle (2) et dont l'extrémité inférieure (non représentée) reçoit l'arrivée d'huile ou de lubrifiant à basse pression, comme cela est bien connu.

Le canal (12) débouche dans la chambre (10) par l'intermédiaire d'un clapet de non-retour d'aspiration (13) n'autorisant que le passage d'huile de basse pression vers le haut lorsque la pression dans la chambre (10) devient inférieure à la basse pression d'alimentation.

Le refoulement de la pompe est assuré par un canal (14) débouchant dans la chambre (10), pourvu d'un clapet de non-retour de refoulement (15) et débouchant dans l'interstice (16) entre la rotule (4) et la coquille (5).

Conformément à l'invention, une cavité de volume fixe (17) est prévue dans le passage de refoulement et, en l'occurrence, cette cavité (17) est pratiquée dans la rotule (4) elle-même, la rotule pouvant, par exemple, être constituée de deux parties assemblées pour la réalisation de la cavité.

On se réfère maintenant à la Figure 2 qui se distingue de la Figure 1 essentiellement par le fait que la pièce d'articulation (4a) est constituée d'un axe cylindrique de piston tourillonnant dans une portée cylindrique correspondante transversale du piston (1) en y étant maintenue par des circlips de retenue axiale de sorte que l'interface entre les première et deuxième pièces mécaniques mobiles, c'est-à-dire piston (1) et bielle (2) est constituée par la surface interne de ladite portée transversale (18) du piston et la surface externe de l'axe ou tourillon (4a).

Un alésage borgne (9) est pratiqué, comme précédemment, dans la pièce d'articulation (4a) pour recevoir le pied de bielle avec son barreau et son arrivée d'aspiration pourvue du clapet unidirectionnel d'aspiration.

Le canal de refoulement (14a) muni de son clapet unidirectionnel de refoulement (15) débouche dans l'interface par un élargissement (19) se trouvant constamment en communication par des canaux (20) avec deux cavités (17a) dont le volume est constant.

On comprend que dans cette forme de réalisation, les cavités (17a) ne sont pas situées directement dans le canal de refoulement mais que simplement elles communiquent directement avec ledit canal, en aval du clapet (15), au niveau de l'interface.

Conformément à l'invention, la cavité de volume constant (17 ou 17a), disposée entre le clapet de refoulement (15) de la pompe et le débouché de l'huile dans l'interface de l'articulation, constitue un accumulateur ou réserve d'huile dont le volume est suffisamment supérieur à la cylindrée utile de la pompe pour limiter l'augmentation de pression mais suffisamment faible pour assurer une augmentation de pression suffisante pour permettre à l'huile accumulée de s'écouler dans l'articulation lorsque la force s'exerçant sur le piston (1) sera retombée, et notamment, par exemple, lorsque le piston sera retombé vers le PMB, de plus de la demi-course, et ceci en un nombre limité de cycles, de préférence, en un seul cycle.

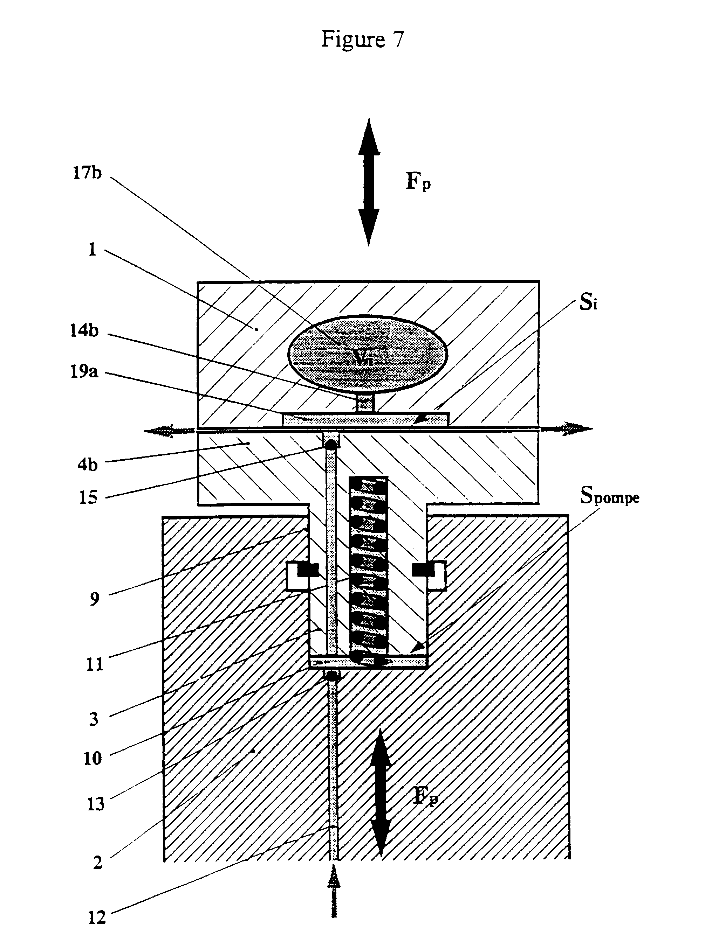

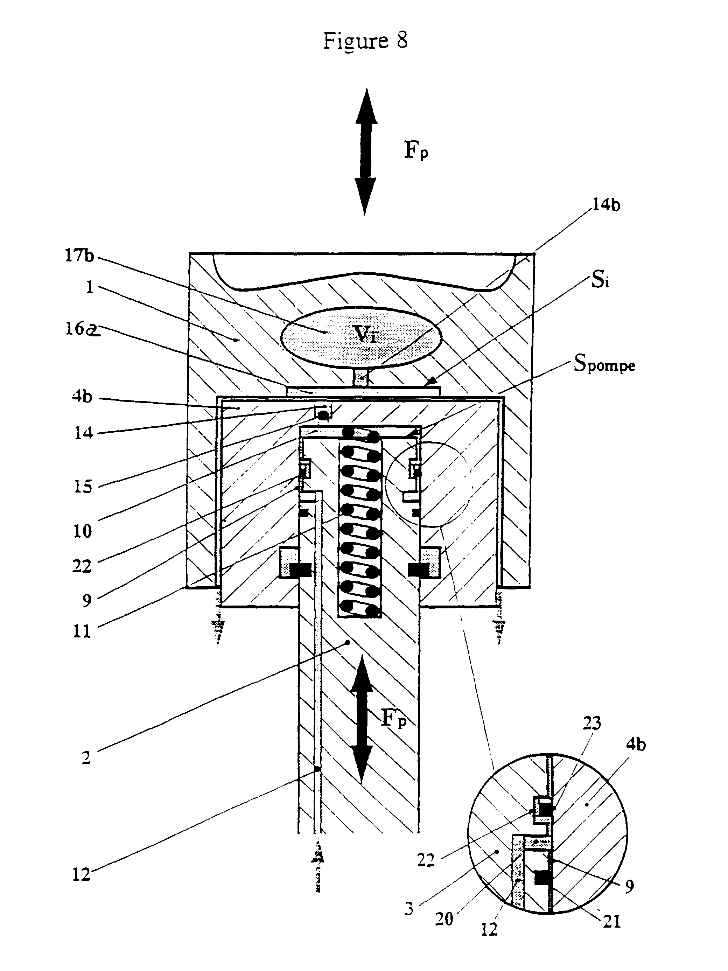

En se référant aux figures 7 et 8 on voit que la susdite cavité de volume fixe Vi, référencée (17b), peut être pratiquée dans la susdite première pièce mécanique (1), par exemple un piston de moteur à deux ou quatre temps, cette cavité communiquant directement avec le volume de l'interstice (16a, 19a) par un canal (14b) en communication avec le canal de refoulement (14) pratiqué dans la pièce d'articulation (4b).

On voit encore, sur la figure 7, que le piston de pompe peut être constitué par une extrémité en forme de manchon cylindrique, de la pièce d'articulation, l'alésage borgne étant alors pratiqué dans l'extrémité de la deuxième pièce mobile, par exemple une bielle.

Le fonctionnement est le suivant :

En régime établi, un film d'huile est présent entre les deux surfaces de l'interface, c'est-à-dire entre la coquille (5) et la pièce (4).

Au PMH, la résultante des forces transmises vers le bas par le piston à la bielle par le biais de l'interface et de la pièce mobile (4) est maximale et la lubrification de l'interface se fait par épuisement du film d'huile.

Dans cette position, le barreau (11) est complètement comprimé et la chambre (10) à son volume minimum.

Lors de la descente de l'ensemble piston/bielle, la force transmise vers le bas diminue progressivement et, par exemple, peu après la demi-course du piston, elle devient suffisamment faible pour permettre au barreau (11) de commencer à se détendre et, en conséquence, à la chambre (10) d'augmenter en volume.

La diminution de pression dans la chambre (10) permet alors l'ouverture du clapet d'aspiration (13) et l'arrivée de l'huile par le canal de basse pression (12) vers la chambre, cette arrivée d'huile dans la chambre pouvant ainsi être étalée sur une longueur importante du cycle de la machine de part et d'autre du PMB.

Lorsque le piston remonte après avoir atteint le PMB, la résultante des forces due à la compression du fluide dans la chambre du cylindre moteur augmente jusqu'à ce que le barreau commence à se comprimer, de sorte que le clapet d'aspiration (13) est appliqué sur son siège et que la pression de l'huile dans la chambre (10) augmente, provoquant l'ouverture du clapet de refoulement (15) et le passage de l'huile dans la cavité (17) formant accumulateur lorsque la pression dans la chambre (10) augmente suffisamment pour dépasser la pression dans la cavité (17), le débit de fuite de l'huile hors de la cavité (17) devenant de plus en plus réduit, en raison de l'accroissement de la pression sur le film d'huile dans l'interstice dû à l'augmentation de la force appliquée par le piston vers le bas sur la pièce d'articulation (4) et de l'épuisement progressif de l'huile.

D'autre part, lorsque pendant la descente du piston, la force transmise par le piston à la rotule (4) devient suffisamment faible, la pression de l'huile comprimée dans la cavité (17) s'exerçant sur les deux faces de l'interstice sera suffisamment élevée pour augmenter l'écartement entre les pièces (1) et (4), permettant à une quantité d'huile de sortir de la cavité (17), de rejoindre l'interstice entre la rotule (4) et la coquille (5), et de se répandre hors de cet interstice pour renouveler le film d'huile dans le jeu entre les deux pièces mobiles.

On comprend bien là l'importance de la section effective de l'interstice, du volume de la cavité par rapport à la cylindrée de la pompe permettant de contrôler la pression dans la chambre (10) et de la cylindrée de la pompe actionnée cycliquement pour renouveler à chaque cycle le film d'huile entre les deux pièces (1) et (4) avec un débit suffisant et donc une épaisseur d'huile permettant à ce film de ne jamais s'épuiser totalement pendant le reste du cycle.

On comprend que l'on peut régler le volume de la cavité (17) et la cylindrée de la pompe pour que cet écoulement d'huile se produise pendant une durée importante du cycle de part et d'autre du PMB.

On comprend qu'en régime établi, le débit moyen de la pompe est égal au débit du flux de l'huile à travers le jeu de fonctionnement.

Ce débit augmente en raison directe du jeu de sorte qu'il se produit un ajustement naturel du jeu.

Le débit de la pompe (et donc sa cylindrée) devra donc être choisi suffisant pour que l'articulation reste en régime de lubrification hydrodynamique, sans contact direct entre les surfaces de l'interface.

Au démarrage, la pression d'huile dans l'accumulateur (17) est nulle. Cette pression va s'accroître dès que la pompe pourra adresser sa quantité d'huile à l'accumulateur (17).

Il est souhaitable que cette pression s'accroisse suffisamment vite pour qu'une quantité d'huile puisse s'échapper, vers le PMB, pour pénétrer dans l'interstice de l'interface de l'articulation et assurer la lubrication.

Comme le montre l'exemple décrit ci-dessous, cette condition peut être atteinte en un très petit nombre de cycles, de préférence un seul.

Exemple : Moteur MT 135 de 135 mm d'alésage

Pour cet exemple on peut aussi se référer à la Figure 7.

    Section transversale du piston : 143 cm2
    Masse totale du piston (Corps du piston et articulation) : 10 kg
    Masse du piston proprement dit (sans son articulation) : 7 kg
    Pression maximale de combustion : 300 bar
    Pression minimale dans le cylindre au PMB : 18 bar
    Vitesse de rotation : 1800 t/mn
    Course : 170 mm
    Longueur de la bielle : 284 mm
    Accélération vers le haut au PMH : 400 g à 1800 t/mn
    Accélération vers le bas au PMB : -216 g à 1800 t/mn
    Force vers le bas au PMH : 300 x 143 - 400 x 10 = 38,9 Tonnes, soit 381 220 N.
    Force vers le bas au PMB : 18 x 143 + 216 x 10 = 4,7 Tonnes, soit 46 060 N.
    Tarage du barreau métallique : 10 Tonnes, soit 98 000 N.
    Raideur du barreau métallique : Kb = 10 Tonnes/mm soit 98 000 N.
    Cylindrée utile de la pompe : 400 mm3 par cycle
    Section transversale du piston de pompe : Sp = 8 cm2
    Course utile de la pompe : 0,50 mm
    Section effective de l'interface de l'articulation:10 cm2
    Volume fixe de la cavité d'huile : 12 cm3 [soit 30 fois la cylindrée de la pompe]
    Coefficient de compressibilité de l'huile Kh=15 000 bar

Fonctionnement de l'articulation.

Lorsque le piston du moteur approche de son Point Mort Haut (PMH) les forces dirigées vers le bas dominent nettement et de ce fait comprimeront totalement le barreau métallique jusqu'à venir en butée :

. Forces dues à l'action des gaz : 300 x 143/1000 = 42,90 Tonnes soit 420 420 N.
. Forces d'inertie : 400 x 10/1000 = - 4,00 Tonnes soit 39 200 N.
. Force due à la compression du barreau : 10 + 0,5 x 10 = - 15,00 Tonnes soit 147 000 N.
. Forces dues à la pression d'huile : 500 x 8/1000 = - 4,00 Tonnes soit 39 200 N.
. Résultante des forces (vers le bas) : 19,90 Tonnes soit 195 020 N.

A chaque course de la pompe, l'élévation de pression dans la réserve sera en effet, en première approximation:

$$P = 15\ 000 \times (\ V/V) = 15\ 000 \times 400 / 12\ 000 = 500\,bar$$

La totalité de la cylindrée de la pompe sera donc stockée dans la cavité d'huile sous une pression de au moins 500 bar (en supposant que la pression soit nulle dans la réserve au début du cycle de compression).

Cette pression s'exerçant sur la section effective de l'interstice (10 cm2) exercera une force vers le haut de 500 x 10/1000 = 5 Tonnes, soit 49 000 N., qui aura tendance à écarter le corps du piston de la pièce d'articulation mais cette force est contrecarrée par la force vers le bas, appliquée sur le corps du piston qui est de (143 x 300 - 7 x 400)/1000 = 40,1 tonnes, soit 392 980 N.

Lorsque le piston du moteur approche du Point Mort Bas (PMB), au contraire, les forces vers le haut dominent nettement :

. Forces dues à l'action des gaz : 18 x 143 / 1000 = 2,57 Tonnes soit 25 186 N.
. Forces d'inertie : 216 x 10 / 1000 = 2,16 Tonnes soit 21 168 N.
. Force due à la compression du barreau : 10 x 0,5 x 10 = - 15,00 Tonnes soit 147 000 N.
. Résultante des forces (vers le haut) : - 10,27 Tonnes soit 100 646 N.

Ceci signifie que vers la mi-course du piston vers le bas, le barreau métallique se décomprimera et que par le jeu des clapets de refoulement et d'aspiration la pompe se remplira à nouveau d'une cylindrée.

Par ailleurs, la pression régnant dans l'interstice (500 bar) exercera sur la section effective de l'interstice (10 cm2) une force dirigée vers le haut de 5 Tonnes, soit 49 000 N., alors que les forces s'exerçant vers le bas sur le corps du piston ne sont plus que de :

. Forces dues à l'action des gaz : 18 x 143 / 1000 = 2,57 Tonnes soit 25 186 N.
. Forces d'inertie sur le corps du piston : 216 x 7 / 1000 = 1,51 Tonnes soit 14 798 N.

**.** Résultante des forces sur le corps du piston : 4,08 Tonnes soit 39 984 N.

Le jeu entre les deux pièces s'ouvrira donc et déchargera la réserve d'huile, lubrifiant au passage l'articulation.

On comprend que si le volume de la cavité (17) est beaucoup plus faible, par exemple, comparable à la cylindrée de la pompe, on obtiendra une pression très élevée dans l'interface au voisinage du PMH alors que la pompe hydraulique ne fonctionnera qu'à débit réduit.

Si au contraire le volume de la réserve est trop élevé, la pression dans la cavité de volume fixe sera insuffisante et il faudra un grand nombre de cycles du piston moteur pour mettre le volume sous pression au risque de fonctionner sans lubrification pendant ce temps de remplissage, et ceci de façon périodique.

Au contraire grâce à l'invention, par un choix judicieux, d'une part de la cylindrée de la pompe, et d'autre part du volume fixe de la cavité, l'homme de l'art peut déterminer le dimensionnement de l'ensemble de façon à faire pénétrer l'huile dans l'interface sous une haute pression relativement modérée, par exemple, inférieure de plus de la moitié à la pression qui devrait être développée si la pompe débitait directement dans l'interface sans cavité, et pendant une durée de temps suffisamment importante pour assurer un bon écoulement de l'huile dans l'interface.

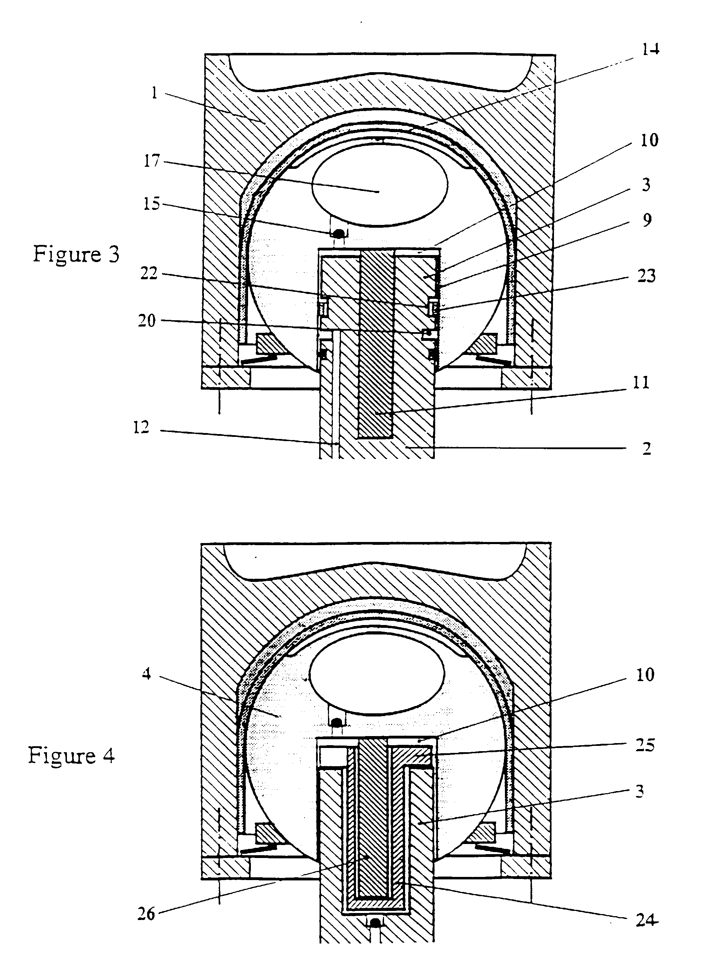

On se réfère maintenant aux Figures 3 et 8.

Du fait qu'un simple clapet d'aspiration tel que (13) présente des problèmes liés à son inertie, par exemple, on peut avantageusement utiliser, à sa place, un moyen de clapet d'aspiration dont l'ouverture et la fermeture sont commandées directement par le mouvement de la pompe hydraulique.

Comme on le voit sur les Figures 3 et 8, le canal (12) d'aspiration de la bielle débouche directement dans une gorge périphérique (20) en communication avec le faible jeu entre la paroi cylindrique du piston formé par la tête de bielle (3) et la paroi cylindrique concentrique de l'alésage (9).

Sous la gorge (20), un segment d'étanchéité usuel (21) est prévu.

Au contraire, au-dessus de la gorge (20) est pratiquée une gorge circulaire (22) dans laquelle peut se débattre longitudinalement et radialement un segment (23) dont le diamètre initial est légèrement supérieur au diamètre de l'alésage (9) afin qu'au montage ce segment soit légèrement serré contre la surface cylindrique de l'alésage.

Comme on le voit sur la figure, le diamètre intérieur de ce segment est sensiblement supérieur au diamètre intérieur de la gorge (22) et sa hauteur est substantiellement inférieure à celle de ladite gorge, la différence entre la hauteur de la gorge et la hauteur du segment étant inférieure à la course de compression du moyen de rappel élastique élastique constitué par le barreau (11).

En outre, la surface supérieure, c'est-à-dire, tournée vers la chambre (10), du segment (23) est munie d'une pluralité de petites gorges radiales permettant l'écoulement de l'huile.

A l'aspiration, c'est-à-dire lorsque le volume de la chambre (10) augmente, la détente du barreau repousse la pièce d'articulation (4), ce qui entraine le segment, à cause de son serrage, vers le haut mais l'huile peut traverser radialement la face supérieure du segment et pénétrer dans la chambre (10) en lubrifiant au passage l'interstice entre la tête (3) et l'alésage (9).

Au refoulement, le segment (23) est repoussé vers le bas et sa face inférieure, prenant appui sur la face inférieure de la gorge, empêche le retour d'huile.

On se réfère maintenant à la Figure 4.

Lorsque l'on veut développer une cylindrée importante de la pompe à lubrifiant liquide, tout en utilisant un barreau métallique pour le rappel élastique, se pose le problème de la résistance élastique du matériau dont est constitué le barreau.

La course de compressibilité élastique du barreau peut être sensiblement augmentée, sans augmenter son encombrement longitudinal en réalisant un barreau télescopique constitué d'une première partie de barreau (24) susceptible de se débattre longitudinalement dans un évidement cylindrique interne à la tête de bielle (3), présentant un épaulement périphérique (25) reposant sur l'extrémité supérieure de la bielle alors que le fond (26) est écarté du fond de l'évidement cylindrique dans la bielle, cette première partie de barreau (24) recevant, avec un jeu de fonctionnement, une deuxième partie de barreau cylindrique (26) qui, au repos, et lorsqu'elle est appliquée contre le fond de la première partie du barreau (25), dépasse au-delà de l'épaulement (25) pour venir en contact avec la pièce d'articulation (4) et déterminer ainsi la position de plus grand volume de la chambre (10).

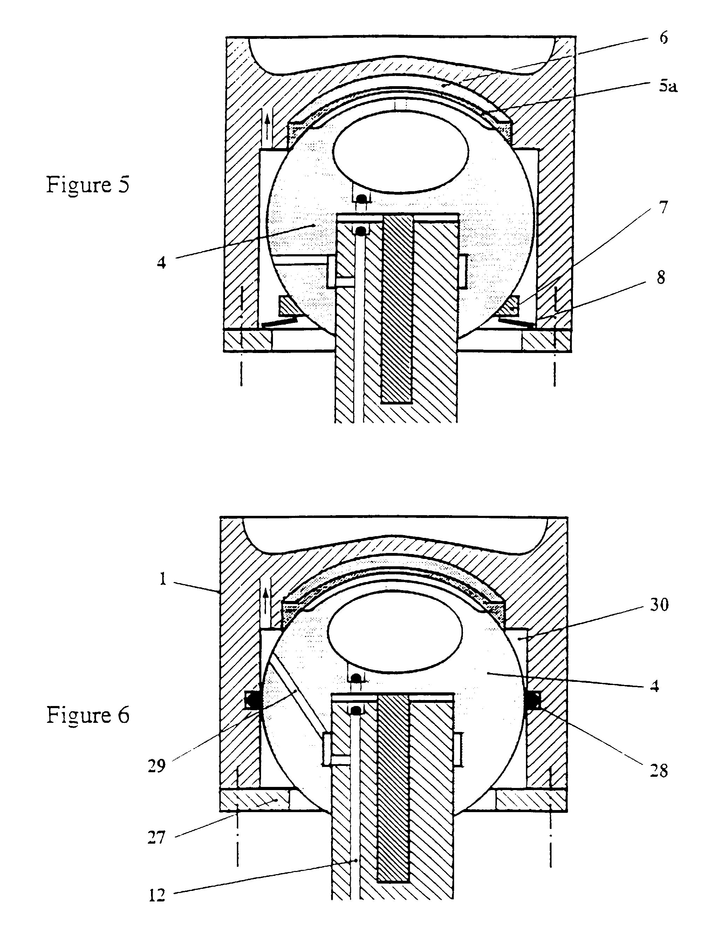

En se référant à la Figure 5, on voit une disposition de l'articulation selon l'invention dans laquelle la surface de frottement de la pièce d'articulation sphérique (4) et de la coquille (5a) est réduite, afin d'éviter des pertes mécaniques et un effet de pincement de la partie équatoriale de la rotule par la portée cylindrique de la coquille.

Ceci est effectué par l'utilisation d'une coquille (5a) de diamètre inférieur au diamètre de la sphère et logée dans un prolongement cylindrique de faible hauteur et à fond sphérique pratiqué dans le piston (1).

On se réfère à la Figure 6.

Pour établir une circulation d'huile de lubrification dans le piston en utilisant l'arrivée (12) d'huile basse pression dans la bielle, on peut réaliser une dérivation d'huile comme représenté sur la Figure 5.

Il faut cependant empêcher l'huile de retomber directement vers le bas et, à cet effet, assurer une étanchéité au niveau de la bague (7) et du moyen élastique (8) comme représenté sur la Figure 5.

Afin d'éliminer les forces de frottement qui en résultent, on peut supprimer l'anneau (7) et l'élément élastique (8), du fait que, au moins dans un moteur de type diesel à deux temps, la résultante des forces exercées par le piston (1) est toujours dirigée vers le bas, c'est-à-dire vers la tête de bielle.

Dans ce cas, on se contente de disposer à l'extrémité inférieure de la jupe du piston un moyen de retenue (27) qui, normalement, n'est pas en contact avec la pièce d'articulation (4), et de prévoir, dans le plan équatorial de la rotule (4), une simple garniture d'étanchéité (28) logée, par exemple, dans une gorge de la surface interne de la jupe du piston (1).

La dérivation (29) du conduit (12) aboutit ainsi dans un volume (30) interne au piston étanchéifié à sa partie inférieure, volume à partir duquel peut s'établir la circulation d'huile dans le piston.

**Revendications**

1. Dispositif de lubrification sous pression d'un assemblage entre deux pièces mécaniques (1,2) mobiles l'une par rapport à l'autre, dont l'une (1) est soumise à des forces cycliquement alternées en intensité et non en direction et d'intensité moyenne variable, transmises à l'autre (2) par l'intermédiaire d'une couche d'huile remplissant un interstice (16) ayant une surface d'action déterminée et situé dans l'interface formée entre lesdites deux pièces mécaniques, qui comporte :

   - des moyens d'alimentation (12) en lubrifiant liquide compressible sous basse pression,
   - des moyens générateurs de haute pression du lubrifiant liquide compressible comprenant une pompe hydraulique comportant un piston (3) susceptible de se déplacer axialement dans un cylindre (9) entre deux positions extrêmes, de façon à constituer une chambre (10) de volume variable dont la variation maximale est appelée cylindrée de la pompe, ladite chambre de volume variable étant reliée, au travers de moyens de communication unidirectionnels (13), aux susdits moyens d'alimentation en lubrifiant liquide, et débouche à travers des moyens de communication unidirectionnels (15), dans le susdit interstice (16) et des moyens de rappel élastique (11) agissant sur le susdit piston de pompe de façon à s'opposer à l'action de la pression du lubrifiant liquide sous pression,
   - les susdits moyens générateurs de haute pression du lubrifiant liquide compressible étant actionnés par les susdites forces cycliquement alternées et par la force de rappel des susdits moyens de rappel élastique,
   - les susdits moyens de rappel élastique (11) étant dimensionnés pour rappeler le piston (3) dans sa position d'origine au repos, lorsque l'intensité des forces cycliques alternées se rapproche ou est voisine de sa valeur cyclique minimale, une pièce d'articulation (4) étant interposée entre lesdites deux pièces mécaniques (1,2) mobiles l'une par rapport à l'autre, ladite pièce d'articulation (4) coopérant avec la première (1) des deux pièces mécaniques de façon à constituer la susdite interface, et avec ladite seconde pièce mécanique (2) de façon à constituer la susdite pompe hydraulique caractérisé en ce que :

   - le susdit interstice (16) communique avec une cavité de volume fixe (17, 17a) formant réserve de lubrifiant liquide,
   - le rapport entre le volume de ladite cavité (17, 17a) et la cylindrée de la susdite pompe étant suffisamment élevé pour que, compte tenu de la compressibilité du lubrifiant liquide compressible, le susdit piston de pompe (3) puisse se débattre cycliquement entre deux positions, sous la seule action des susdites forces cycliquement alternées et de la force de rappel des susdits moyens de rappel élastique (11), au moins lorsque lesdites forces atteignent leur intensité moyenne maximale,
   - la surface d'action de l'interstice (16) étant suffisamment élevée et le volume de la cavité (17, 17a), rapporté au volume de la cylindrée de la pompe, suffisamment faible pour que la pression générée dans ledit interstice puisse atteindre la valeur permettant d'écarter la première pièce mécanique (1) de la pièce d'articulation (4), pendant la partie du cycle de variation des forces cycliquement alternées dans laquelle l'intensité de ces forces cycliques alternées est minimale, et au bout d'un nombre de cycles faible, de préférence de un cycle,
   - la cylindrée de la pompe étant suffisamment élevée pour pouvoir compenser cycliquement la quantité de lubrifiant liquide susceptible de fuir et de s'échapper de la susdite interface par les jeux de fonctionnement de l'assemblage, ces jeux étant suffisamment élevés pour permettre la lubrification hydrodynamique de l'assemblage sans contact direct entre les matériaux constitutifs de celui-ci.

2. Dispositif selon la revendication 1, pour la lubrification d'un assemblage entre une bielle (2) et un piston (1), articulés entre eux, d'une machine alternative à compression de fluide, notamment un moteur alternatif à combustion interne ou externe à deux temps ou un compresseur volumétrique.

3. Dispositif selon la revendication 2, comportant :

   - une bielle (2) télescopique dont le pied comporte une extrémité d'axe parallèle à l'axe principal de la bielle,

- un piston (1) coulissant alternativement dans un cylindre coopérant avec une culasse de façon à comprimer un fluide et présentant dans sa partie inférieure un évidement dans lequel vient se loger le pied de la bielle,

- une pièce d'articulation (4) interposée entre le pied de bielle et le piston, qui présente une surface extérieure qui coopère dans sa partie supérieure, avec un jeu de fonctionnement minimal, avec la surface intérieure (5) du susdit évidement aménagé dans la partie inférieure du piston,

- l'une desdites bielle et pièce d'articulation comportant une extrémité réalisée sous forme d'un manchon cylindrique (3) formant piston, et l'autre comportant un alésage borgne (9) dans lequel coulisse, avec un jeu de fonctionnement minimal, la susdite extrémité (3) en forme de manchon cylindrique, de façon à délimiter une première cavité de volume variable,

- des moyens d'alimentation en lubrifiant liquide sous pression qui font communiquer la susdite cavité de volume variable (10), à travers un clapet d'aspiration (13), avec des moyens d'alimentation sous basse pression (12) aménagés dans le corps de bielle, et à travers un clapet de refoulement (15), avec l'interstice situé entre la surface intérieure du susdit évidement aménagé dans la partie inférieure du piston et la surface extérieure supérieure de la susdite pièce d'articulation,

- des moyens de rappel élastique (11) interposés entre l'extrémité du pied de bielle en forme de manchon cylindrique et la surface supérieure de l'alésage borgne dans lequel coulisse cette susdite extrémité de bielle,

- l'ensemble de la susdite cavité de volume variable (10), des moyens de rappel élastique et des clapets d'aspiration et de refoulement constituant une pompe hydraulique à haute pression actionnée par la pression du fluide comprimé s'exerçant sur ledit piston caractérisé en ce que le volume de ladite cavité de volume fixe (17) est suffisamment élevé, par rapport à la cylindrée de la pompe hydraulique, pour que la pression dans ladite cavité (17) reste inférieure à la pression dudit fluide comprimé multipliée par le rapport entre la section transversale dudit piston (1) et la section transversale du susdit manchon cylindrique (3) constituant l'extrémité du pied de bielle.

4. Dispositif de lubrification de l'articulation piston-bielle de moteurs alternatifs, notamment de moteurs à cycle à deux temps, selon l'une des revendications 1 et 2 caractérisé en ce que le volume de ladite cavité peut être avantageusement compris entre 30 et 100 fois la cylindrée de la pompe.

5. Dispositif selon l'une des revendications 1 à 4, caractérisé en ce que les susdits moyens de rappel élastique (11) sont constitués par un barreau métallique logé axialement dans la susdite seconde pièce métallique (2) et d'une section suffisamment petite pour être complètement comprimé, de façon que la susdite pièce d'articulation (4) vienne en contact direct avec ladite seconde pièce métallique (2) lorsque l'intensité de la susdite force cycliquement alternée est maximale et dirigée depuis la première pièce vers la seconde, et d'une section suffisamment élevée pour être complètement détendu, c'est-à-dire de telle façon que la susdite chambre de volume variable (10) atteigne sa valeur maximale lorsque l'intensité de la susdite force cycliquement alternée est minimale, ledit barreau étant d'une longueur suffisante pour que, entre la position comprimée et la position détendue, le matériau constituant ledit barreau métallique n'atteigne en aucune circonstance sa limite de fatigue.

6. Dispositif selon la revendication 5, caractérisé en ce que ledit barreau est constitué de deux ou plusieurs pièces télescopiques (24,26) disposées les unes dans les autres afin d'obtenir un débattement longitudinal total important.

7. Dispositif selon l'une des revendications 1 à 6, caractérisé en ce que ladite cavité fixe est disposée soit dans ladite pièce d'articulation (4), soit dans la susdite première pièce mécanique (1), auquel cas le débouché du lubrifiant liquide vers l'interstice (16) est situé dans la communication entre un clapet de refoulement et ladite cavité, soit pratiquée partiellement dans ladite pièce d'articulation (4) et ladite première pièce mécanique (1).

8. Dispositif selon l'une des revendications 1 à 7, caractérisé en ce que les moyens (13,15) qui assurent le caractère unidirectionnel des flux de lubrifiant sont des clapets auto-actionnés.

9. Dispositif selon l'une des revendications 1 à 7, caractérisé par un clapet d'aspiration dont l'ouverture et la fermeture sont commandées directement par le mouvement de la pompe hydraulique.

10. Dispositif selon la revendication 9, caractérisé en ce que ledit clapet d'aspiration de la pompe hydraulique est constitué par un segment (22) logé dans une gorge circulaire (23) aménagé dans la partie supérieure et à la périphérie d'un manchon cylindrique (3) constituant l'extrémité supérieure de la susdite seconde pièce mécanique (2) formant piston de la pompe et coopérant avec la susdite pièce d'articulation (4) en coulissant axialement dans un alésage cylindrique borgne (9) aménagé dans ladite pièce intermédiaire, le diamètre extérieur avant montage dudit segment étant légèrement supérieur au diamètre intérieur du susdit alésage cylindrique borgne (9), de façon à provoquer au montage un léger serrage de ce segment dans l'alésage, le diamètre intérieur de ce segment (22) étant substantiellement supérieur au diamètre intérieur de ladite gorge (23) et sa hauteur étant substantiellement inférieure à celle de ladite gorge de façon à pouvoir battre dans ladite gorge, et la face supérieure de ce segment étant pourvue de passages radiaux permettant l'écoulement du lubrifiant liquide compressible depuis la susdite chambre de volume variable vers les susdits moyens d'alimentation en lubrifiant liquide compressible aux basses pressions, lorsque le segment est en appui sur la face supérieure de la gorge, la sur-hauteur de la gorge circulaire par rapport à la hauteur du segment étant inférieure à la course de compression des moyens de rappel élastique.

11. Dispositif selon l'une des revendications 2 à 10, caractérisé en ce que la susdite pièce d'articulation est constituée par un axe (4a) de piston cylindrique perpendiculaire à l'axe principal de la bielle (2) et qui coopère partiellement, avec un jeu de fonctionnement minimal, avec un alésage d'axe perpendiculaire à l'axe du piston (1) et de diamètre égal, au jeu de fonctionnement près, à celui dudit axe de piston cylindrique.

12. Dispositif selon l'une des revendications 2 à 11, caractérisé en ce que la susdite pièce d'articulation (4) constitue une pièce dont la surface extérieure supérieure est partiellement sphérique et qui comporte dans sa partie inférieure un alésage cylindrique borgne (9) coopérant avec la susdite extrémité cylindrique de la bielle pour former la susdite chambre de volume variable, la susdite première pièce mécanique, formant corps de piston, comportant un évidement inférieur dont la surface extérieure (5) est également partiellement sphérique et dont le centre se situe sur l'axe principal de la bielle, et qui coopère partiellement, avec un jeu de fonctionnement minimal, avec la surface extérieure de la susdite pièce d'articulation.

13. Dispositif selon la revendication 12, caractérisé en ce que ladite surface extérieure dudit évidement intérieur de piston est fournie par une coquille (5) partiellement sphérique délimitant entre elle et ledit piston (1), un espace (6) dans lequel est emprisonné un matériau fluable le remplissant entièrement.

14. Dispositif selon l'une des revendications 12 et 13, caractérisé en ce que ladite pièce d'articulation sphérique coopère, pour former ladite interface, avec une surface extérieure d'évidement de piston de diamètre réduit par rapport au diamètre de ladite pièce d'articulation (4) et qu'une garniture (28) d'étanchéité au lubrifiant est interposée entre ledit piston et ladite pièce (4) sensiblement dans un plan équatorial de cette dernière pour délimiter un volume de lubrifiant susceptible d'alimenter un système de lubrification de piston.

## Claims

1. Pressurised lubricating device for an assembly between two mechanical parts (1, 2) which are movable relative to one another, one of which (1) is subjected to forces alternating cyclically in intensity but not in direction and of variable mean intensity, which are transmitted to the other (2) via a layer of oil filling an interstice (16) having a defined operating surface and located in the interface between said two mechanical parts, which comprises:

   - means (12) for supplying compressible liquid lubricant under low pressure,
   - means for generating high pressure in the compressible liquid lubricant, comprising a hydraulic pump having a piston (3) adapted to move axially in a cylinder (9) between two extreme positions, so as to form a chamber (10) of variable volume the maximum variation of which is referred to as the pump displacement, said chamber of variable volume being connected, via one-way communication means (13), with said means for supplying liquid lubricant, and opening, via one-way communication means (15), into said interstice (16), and resilient return means (11) acting on said pump piston so as to counter the action of the pressure of the pressurised liquid lubricant,
   - said means for generating high pressure in the compressible liquid lubricant being actuated by the abovementioned cyclically alternating forces and by the restoring force of said resilient return means,

   said resilient return means (11) being of such dimensions as to return the piston (3) to its original resting position when the intensity of the alternating cyclical forces is approaching or close to its minimum cyclical value, an articulation member (4) being interposed between said two mechanical parts (1, 2) which are movable relative to each other, said articulation member (4) cooperating with the first (1) of the two mechanical parts so as to form said interface, and with said second mechanical part (2) so as to form said hydraulic pump, characterised in that:

- said interstice (16) communicates with a cavity of fixed volume (17, 17a) forming a liquid lubricant store,
- the ratio between the volume of said cavity (17, 17a) and the displacement of said pump is sufficiently high so that, taking into account the compressibility of the compressible liquid lubricant, said pump piston (3) is able to move cyclically between two positions, under the sole effect of said cyclically alternating forces and the restoring force of said resilient return means (11), at least when said forces reach their maximum mean intensity,
- the operating surface of the interstice (16) being great enough and the volume of the cavity (17, 17a), relative to the volume of the pump displacement, being small enough for the pressure generated in said interstice to be able to reach the value which enables the first mechanical part (1) to move away from the articulation member (4), during that part of the cycle of variation of the cyclically alternating forces when the intensity of these alternate cyclical forces is minimal, and after a small number of cycles, preferably one cycle,
- the displacement of the pump being great enough to be able to compensate cyclically for the quantity of liquid lubricant likely to leak out and escape from said interface as a result of the operating play in the assembly, this play being great enough to allow hydrodynamic lubrication of the assembly without any direct contact between the materials which constitute it.

2. Device according to claim 1, for lubricating an assembly between a connecting rod (2) and a piston (1), coupled with each other, in a reciprocating fluid compression machine, notably a two-stroke internal or external combustion engine or a volumetric compressor.

3. Device according to claim 2, comprising:

   - a telescopic connecting rod (2) the small end of which has an extremity the axis of which is parallel to the main axis of the connecting rod,
   - a piston (1) sliding in reciprocating manner in a cylinder cooperating with a cylinder block so as to compress a fluid and having in its lower part a recess in which the small end of the connecting rod is received,
   - an articulation member (4) interposed between the small end of the connecting rod and the piston, which has an outer surface which cooperates in its upper part, with minimum operating play, with the inner surface (5) of said recess formed in the lower part of the piston,
   - one of said connecting rod and articulation member having one extremity in the form of a cylindrical sleeve (3) forming a piston, and the other comprising a blind bore (9) in which said extremity (3) in the form of a cylindrical sleeve slides, with minimum operating play, so as to define a first cavity of variable volume,
   - means for supplying pressurised liquid lubricant which cause said cavity of variable volume (10) to communicate, via an intake valve (13), with low pressure supply means (12) formed in the connecting rod body, and via an outlet valve (15), with the interstice located between the inner surface of said recess formed in the lower part of the piston and the upper outer surface of said articulation member,
   - resilient return means (11) interposed between the extremity of the small end of the connecting rod shaped as a cylindrical sleeve and the upper surface of the blind bore in which said connecting rod extremity slides,
   - the whole of said cavity of variable volume (10), the resilient return means and intake and outlet valves constituting a high pressure hydraulic pump actuated by the pressure of the compressed fluid exerted on said piston, characterised in that the volume of said cavity of fixed volume (17) is high enough, in relation to the displacement of the hydraulic pump, for the pressure in said cavity (17) to remain below the pressure of said compressed fluid multiplied by the ratio between the cross section of said piston (1) and the cross section of said cylindrical sleeve (3) which constitutes the extremity of the small end of the connecting rod.

4. Lubricating device for the piston-connecting rod coupling in reciprocating engines, notably two-stroke cycle engines, according to one of claims 1 and 2, characterised in that the volume of said cavity may advantageously be between 30 and 100 times the displacement of the pump.

5. Device according to one of claims 1 to 4, characterised in that said resilient return means (11) consist of a metal bar housed axially in said second metal part (2) and sufficiently small in section to be completely compressed, so that said articulation member (4) comes into direct contact with said second metal part (2) when the intensity of said cyclically alternating force is at its maximum and directed from the first part towards the second, and sufficiently large in section to be completely uncompressed, i.e. so that said chamber of variable volume (10) reaches its maximum value when the intensity of said cyclically alternating force is at its minimum, said bar being of a sufficient length so that, between the compressed position and the uncompressed position, the material which constitutes said metal bar does not reach its fatigue limit under any circumstances.

6. Device according to claim 5, characterised in that said bar consists of two or more telescopic parts (24, 26) arranged inside one another so as to obtain a substantial total longitudinal movement.

7. Device according to one of claims 1 to 6, characterised in that said fixed cavity is arranged either in said articulation member (4) or in said first mechanical part (1), in which case the outlet for liquid lubricant into the interstice (16) is located in the communication pathway between an outlet valve and said cavity, or formed partially in said articulation member (4) and said first mechanical part (1).

8. Device according to one of claims 1 to 7, characterised in that the means (13, 15) which ensure the unidirectional nature of the flows of lubricant are self-activated valves.

9. Device according to one of claims 1 to 7, characterised by an intake valve the opening and closing of which are controlled directly by the movement of the hydraulic pump.

10. Device according to claim 9, characterised in that said intake valve of the hydraulic pump consists of a segment (22) housed in a circular groove (23) provided in the upper part and on the periphery of a cylindrical sleeve (3) constituting the upper end of said second mechanical part (2) forming a piston of the pump and cooperating with said articulation member (4), sliding axially in a blind cylindrical bore (9) formed in said intermediate part, the outer diameter before the mounting of said segment being slightly greater than the inner diameter of said blind cylindrical bore (9), so as to cause, on mounting, gentle gripping of this segment in the bore, the inner diameter of this segment (22) being substantially greater than the inner diameter of said groove (23) and its height being substantially less than that of said groove, so as to be able to move within said groove, and the upper surface of this segment being provided with radial passages allowing the compressible liquid lubricant to flow from said chamber of variable volume towards said means for supplying compressible liquid lubricant at low pressures, when the segment bears on the upper surface of the groove, the extra height of the circular groove relative to the height of the segment being less than the compression travel of the resilient return means.

11. Device according to one of claims 2 to 10, characterised in that said articulation member consists of a spindle (4a) of a cylindrical piston perpendicular to the main axis of the connecting rod (2) and cooperating partially, with minimal operating play, with a bore the axis of which is perpendicular to the axis of the piston and of the same diameter, apart from the operating play, as that of the cylindrical piston spindle.

12. Device according to one of claims 2 to 11, characterised in that said articulation member (4) constitutes a part the upper outer surface of which is partially spherical and which comprises, in its lower part, a blind cylindrical bore (9) cooperating with said cylindrical end of the connecting rod to form said chamber of variable volume, said first mechanical part, forming the piston body, having a lower recess the outer surface (5) of which is also partially spherical and the centre of which is located on the main axis of the connecting rod, and which cooperates partially, with minimal operating play, with the outer surface of said articulation member.

13. Device according to claim 12, characterised in that said outer surface of said inner piston recess is provided by a partially spherical shell (5) defining, between it and said piston (1), a space (6) in which a flowable material which fills it up completely is trapped.

14. Device according to one of claims 12 and 13, characterised in that said spherical articulation member co-operates, to form said interface, with an outer surface of the piston recess of smaller diameter than said articulation member (4), and in that a lining (28) for sealing off the lubricant is interposed between said piston and said part (4) substantially in an equatorial plane of the latter, to define a volume of lubricant capable of supplying a piston lubricating system.

**Patentansprüche**

1. Vorrichtung zum Druckschmieren einer Anordnung aus zwei mechanischen Teilen (1, 2), die relativ zueinander beweglich sind und wovon eines (1) Kräften mit veränderlicher mittlerer Stärke unterliegt, die in bezug auf die Stärke und nicht auf die Richtung zyklisch geändert und an das andere (2) über eine Ölschicht übertragen werden, die einen Zwischenraum (16) füllt, der eine bestimmte Wirkoberfläche besitzt und sich an der zwischen den beiden mechanischen Teilen gebildeten Grenzfläche befindet, mit:

   - Mitteln (12) für die Versorgung mit komprimierbarem, flüssigen Schmiermittel bei niedrigem Druck,
   - Mitteln für die Erzeugung eines hohen Drucks des komprimierbaren flüssigen Schmiermittels, die eine Hydraulikpumpe enthalten, die versehen ist mit einem Kolben (3), der sich in einem Zylinder (9) zwischen zwei Extrempositionen axial verschieben kann, so daß eine Kammer (10) mit veränderlichem Volumen gebildet wird, dessen maximale Änderung Hubvolumen der Pumpe genannt wird, wobei die Kammer mit veränderlichem Volumen über unidirektionale Verbindungsmittel (13) mit den Mitteln für die Versorgung mit flüssigem Schmiermittel verbunden ist und über unidirektionale Verbindungsmittel (15) in den Zwischenraum (16) mündet, sowie mit elastischen Rückstellmitteln (11), die auf den Kolben der Pumpe in der Weise einwirken, daß sie der Wirkung des Drucks des mit Druck beaufschlagten flüssigen Schmiermittels entgegenwirken,

- wobei die Mittel für die Erzeugung eines hohen Drucks des komprimierbaren flüssigen Schmiermittels durch die zyklisch geänderten Kräfte und durch die Rückstellkraft der elastischen Rückstellmittel betätigt werden,

- wobei die elastischen Rückstellmittel (11) so dimensioniert sind, daß sie den Kolben (3) in seine Ausgangs-Ruheposition zurückstellen, wenn sich die Stärke der zyklisch geänderten Kräfte dem minimalen zyklischen Wert annähert oder in dessen Umgebung liegt, wobei zwischen die beiden relativ zueinander beweglichen mechanischen Teile (1, 2) ein Gelenkteil (4) eingesetzt ist, das mit dem ersten (1) der beiden mechanischen Teile in der Weise zusammenwirkt, daß die Grenzfläche gebildet wird, und mit dem zweiten mechanischen Teil (2) in der Weise zusammenwirkt, daß die Hydraulikpumpe gebildet wird,

dadurch gekennzeichnet, daß:

- der Zwischenraum (16) mit einem Hohlraum (17, 17a) mit festem Volumen, der einen Behälter für flüssiges Schmiermittel bildet, in Verbindung steht,

- das Verhältnis zwischen dem Volumen des Hohlraums (17, 17a) und dem Hubvolumen der Pumpe ausreichend hoch ist, damit sich der Kolben (3) der Pumpe unter Berücksichtigung der Kompressibilität des komprimierbaren flüssigen Schmiermittels zyklisch zwischen zwei Positionen lediglich unter der Wirkung der zyklisch geänderten Kräfte und der Rückstellkraft der elastischen Rückstellmittel (11) zumindest dann zwischen zwei Positionen zyklisch hin und her bewegen kann, wenn die Kräfte ihre maximale mittlere Stärke erreichen,

- wobei die Wirkoberfläche des Zwischenraums (16) ausreichend groß ist und das Volumen des Hohlraums (17, 17a), das mit dem Hubvolumen der Pumpe in Beziehung steht, ausreichend klein ist, damit der in dem Zwischenraum erzeugte Druck den Wert annehmen kann, der ermöglicht, das erste mechanische Teil (1) von dem Gelenkteil (4) während desjenigen Abschnitts des Änderungszyklus der zyklisch geänderten Kräfte, in dem die Stärke dieser zyklisch geänderten Kräfte minimal ist, sowie am Ende einer kleinen Anzahl von Zyklen, vorzugsweise eines Zyklus, zu entfernen,

- wobei das Hubvolumen der Pumpe ausreichend hoch ist, um die Menge von flüssigem Schmiermittel, die auslaufen und aus der Grenzfläche aufgrund des Spiels des Betriebs der Anordnung entweichen kann, zyklisch kompensieren zu können, wobei dieses Spiel ausreichend hoch ist, um die hydrodynamische Schmierung der Anordnung ohne direkten Kontakt zwischen den sie bildenden Materialien zu ermöglichen.

2. Vorrichtung nach Anspruch 1 für die Schmierung einer Anordnung aus einem Pleuel (2) und einem Kolben (1), die aneinander angelenkt sind und zu einer Kolbenkraftmaschine mit Fluidkompression, insbesondere zu einer Zweitakt-Hubkolbenmaschine mit interner oder externer Verbrennung, oder zu einem Verdrängerverdichter gehören.

3. Vorrichtung nach Anspruch 2, mit:

- einem Teleskop-Pleuel (2), dessen Fuß ein Ende aufweist, dessen Achse zur Hauptachse des Pleuels parallel ist,

- einem Kolben (1), der in einem Zylinder hin und her gleitet, der mit einem Zylinderkopf in der Weise zusammenwirkt, daß er ein Fluid komprimiert, und in seinem unteren Teil eine Aussparung aufweist, in der sich der Fuß des Pleuels befindet,

einem Gelenkteil (4), das zwischen den Pleuelfuß und den Kolben eingesetzt ist und eine äußere Oberfläche aufweist, die in ihrem oberen Teil mit minimalem Betriebsspiel mit der inneren Oberfläche (5) der in dem unteren Teil des Kolbens ausgebildeten Aussparung zusammenwirkt,

- wobei entweder das Pleuel oder das Gelenkteil ein Ende aufweist, das in Form einer zylindrischen Muffe (3) verwirklicht ist, die den Kolben bildet, während das jeweils andere eine Blindbohrung (9) aufweist, in der mit minimalem Betriebsspiel das Ende (3) in Form einer zylindrischen Muffe gleitet, so daß ein erster Hohlraum mit veränderlichem Volumen begrenzt wird,

- Mitteln für die Versorgung mit mit Druck beaufschlagtem flüssigen Schmiermittel, die den Hohlraum mit veränderlichem Volumen (10) über eine Ansaugklappe (13) mit den Niederdruck-Versorgungsmitteln (12), die in dem Pleuelkörper angeordnet sind, und über eine Rückschlagklappe (15) mit dem zwischen der inneren Oberfläche der in dem unteren Teil des Kolbens ausgebildeten Aussparung und der oberen äußeren Oberfläche des Gelenkteils befindlichen Zwischenraum verbinden,

- elastischen Rückstellmitteln (11), die zwischen das Ende des Pleuelfußes in Form einer zylindrischen Muffe und die obere Oberfläche der Blindbohrung, in der dieses Pleuelende gleitet, eingesetzt sind,

- wobei die Gesamtheit aus dem Hohlraum mit veränderlichem Volumen (10), den elastischen Rückstellmitteln und den Ansaug- und Rückschlagklappen eine Hochdruck-Hydraulikpumpe bildet, die durch den Druck des komprimierten Fluids betätigt wird, der auf den Kolben wirkt, dadurch gekennzeichnet, daß das Volumen des Hohlraums mit festem Volumen (17) in bezug auf das Hubvolumen der Hydraulikpumpe ausreichend hoch ist, damit der Druck in dem Hohlraum (17) niedriger ist als der Druck des komprimierten Fluids, multipliziert mit dem Verhältnis zwischen dem transversalen Querschnitt des Kolbens (1) und dem transversalen Querschnitt der zylindrischen Muffe (3), die das Ende des Pleuelfußes bildet.

4. Vorrichtung zum Schmieren eines Kolben-Pleuel-Gelenks von Hubkolbenmaschinen, insbesondere von Zweitakt-Motoren, nach irgendeinem der Ansprüche 1 und 2, dadurch gekennzeichnet, daß das Volumen des Hohlraums vorteilhaft im Bereich vom 30- bis 100 fachen des Hubvolumens der Pumpe liegt.

5. Vorrichtung nach einem der Ansprüche 1 bis 4, dadurch gekennzeichnet, daß die elastischen Rückstellmittel (11) durch einen Metallstab gebildet sind, der in dem zweiten Metallteil (2) axial angeordnet ist und einen Querschnitt aufweist, der ausreichend klein ist, um vollständig komprimiert zu werden, so daß das Gelenkteil (4) direkt mit dem zweiten metallischen Teil (2) in Kontakt gelangt, wenn die Stärke der zyklisch geänderten Kraft maximal und vom ersten zum zweiten Teil gerichtet ist, und einen ausreichend großen Querschnitt aufweist, um vollständig entspannt zu werden, d. h. derart, daß die Kammer (10) mit veränderlichem Volumen ihren Maximalwert erreicht, wenn die Stärke der zyklisch geänderten Kraft minimal ist, wobei der Stab eine ausreichende Länge besitzt, damit das den metallischen Stab bildende Material zwischen der komprimierten Position und der entspannten Position unter keinen Umständen seine Ermüdungsgrenze erreicht.

6. Vorrichtung nach Anspruch 5, dadurch gekennzeichnet, daß der Stab aus zwei oder mehr Teleskopteilen (24, 26) gebildet ist, die ineinander angeordnet sind, um einen großen longitudinalen Gesamtausschlag zu erhalten.

7. Vorrichtung nach einem der Ansprüche 1 bis 6, dadurch gekennzeichnet, daß der feste Hohlraum entweder in dem Gelenkteil (4) oder in dem ersten mechanischen Teil (1) angeordnet ist, wobei sich in diesem Fall die Durchflußöffnung für das flüssige Schmiermittel zum Zwischenraum (16) in der Verbindung zwischen einer Rückschlagklappe und dem Hohlraum befindet, oder aber teilweise in dem Gelenkteil (4) und teilweise in dem ersten mechanischen Teil (1) ausgebildet ist.

8. Vorrichtung nach einem der Ansprüche 1 bis 7, dadurch gekennzeichnet, daß die Mittel (13, 15), die die unidirektionale Eigenschaft der Schmiermittelflüsse sicherstellen, selbstbetätigte Klappen sind.

9. Vorrichtung nach einem der Ansprüche 1 bis 7, gekennzeichnet durch eine Ansaugklappe, deren Öffnungs- und Schließvorgänge direkt durch die Bewegung der Hydraulikpumpe gesteuert werden.

10. Vorrichtung nach Anspruch 9, dadurch gekennzeichnet, daß die Ansaugklappe der Hydraulikpumpe durch ein Segment (22) gebildet ist, das sich in einer kreisförmigen Kehle (23) befindet, die in dem oberen Teil und am Umfang einer zylindrischen Muffe (3) ausgebildet ist, die das obere Ende des zweiten mechanischen Teils (2) bildet, das den Kolben der Pumpe bildet und mit dem Gelenkteil (4) in der Weise zusammenwirkt, daß es in einer zylindrischen Blindbohrung (9) axial gleitet, die in dem Zwischenteil ausgebildet ist, wobei der Außendurchmesser des Segments vor der Montage etwas größer als der Innendurchmesser der zylindrischen Blindbohrung (9) ist, so daß bei der Montage eine leichte Pressung dieses Segments in der Bohrung hervorgerufen wird, wobei der Innendurchmesser dieses Segments (22) wesentlich größer als der Innendurchmesser der Kehle (23) ist und seine Höhe wesentlich kleiner als diejenige der Kehle ist, so daß es sich in der Kehle hin und her bewegen kann, wobei die obere Fläche dieses Segments mit radialen Durchlässen versehen ist, die das Auslaufen des komprimierbaren flüssigen Schmiermittels aus der Kammer mit veränderlichem Volumen zu den Mitteln für die Versorgung mit komrimierbarem flüssigen Schmiermitteln unter niedrigen Drücken ermöglichen, wenn sich das Segment auf der oberen Fläche der Kehle abstützt, wobei die die Höhe des Segments überragende Höhe der kreisförmigen Kehle kleiner als der Kompressionshub der elastischen Rückstellmittel ist.

11. Vorrichtung nach einem der Ansprüche 2 bis 10, dadurch gekennzeichnet, daß das Gelenkteil durch eine Achse (4a) des zylindrischen Kolbens senkrecht zur Hauptachse des Pleuels (2) gebildet ist, die teilweise und mit minimalem Betriebsspiel mit einer Bohrung mit einer zur Achse des Kolbens (1) senkrechten Achse und einem Durchmesser, der bis auf ein Betriebsspiel gleich demjenigen der Achse des zylindrischen Kolbens ist, zusammenwirkt.

12. Vorrichtung nach einem der Ansprüche 2 bis 11, dadurch gekennzeichnet, daß das Gelenkteil (4) ein Teil bildet, dessen obere äußere Oberfläche teilweise sphärisch ist und das in seinem unteren Teil eine zylindrische Blindbohrung (9) aufweist, die mit dem zylindrischen Ende des Pleuels zusammenwirkt, um die Kammer mit veränderlichem Volumen zu bilden, wobei das erste mechanische Teil, das den Körper des Kolbens bildet, eine untere Aussparung besitzt, deren äußere Oberfläche (5) ebenfalls teilweise sphärisch ist und deren Zentrum sich auf der Hauptachse des Pleuels befindet und die teilweise, mit einem minimalen Betriebspiel, mit der äußeren Oberfläche des Gelenkteils zusammenwirkt.

13. Vorrichtung nach Anspruch 12, dadurch gekennzeichnet, daß die äußere Oberfläche der inneren Aussparung des Kolbens durch eine teilsphärische Schale (5) gebildet ist, die zwischen sich und dem Kolben (1) einen Raum (6) begrenzt, in den ein fließfähiges Material eingeschlossen ist, das ihn vollständig füllt.

14. Vorrichtung nach einem der Ansprüche 12 und 13, dadurch gekennzeichnet, daß das sphärische Gelenkteil für die Bildung der Grenzfläche mit einer äußeren Oberfläche der Aussparung des Kolbens zusammenwirkt, deren Durchmesser in bezug auf den Durchmesser des Gelenkteils (4) verringert ist, und daß zwischen den Kolben und das Teil (4) im wesentlichen in der Äquatorialebene dieses letzteren eine Schmiermittel-Dichtung (28) eingesetzt ist, um ein Schmiermittel volumen zu begrenzen, das ein Kolbenschmierungssystem versorgen kann.

Figure 1

Figure 2

Figure 3

Figure 4

Figure 5

Figure 6

Figure 7

Figure 8